# NEW EUROPEAN PATENT SPECIFICATION

(11) **EP 1 255 249 B2**
(45) Date of publication and mention of the opposition decision: **02.02.2011**
(45) Mention of the grant of the patent: 15.06.2005
(21) Application number: 02252886.3
(22) Date of filing: 24.04.2002
(51) Int. Cl.: G11B 20/00, H04N 7/16, H04N 5/913, H04N 1/32, G06T 1/00, H04N 7/26

(54) **Decoder, decoding method and decoding program embodied on computer-readable medium**
Dekoder, Dekodierungsverfahren und Dekodierungsprogramm auf einem rechnerlesbarem Medium
Décodeur, procédé de décodage et programme de décodage sur un support lisible par ordinateur

(30) Priority: 27.04.2001 JP 2001133466
(43) Date of publication of application: 06.11.2002
(73) Proprietor: Pioneer Corporation, Kanagawa 212-0031 (JP)
(72) Inventor: Kuroda, Kazuo, C/o Pionner Corporation, Tokorozawa-shi, Saitama-ken (JP)
(74) Representative: Haley, Stephen

(56) References cited:
- EP-A- 0 860 997
- EP-A- 1 047 067
- EP-A2- 0 618 734
- WO-A-98/31152
- BLOOM J A ET AL: "COPY PROTECTION FOR DVD VIDEO" PROCEEDINGS OF THE IEEE, IEEE. NEW YORK, US, vol. 87, no. 7, July 1999 (1999-07), pages 1267-1276, XP000861525 ISSN: 0018-9219
- LINNARTZ J P M G: "THE TICKET CONCEPT FOR COPY CONTROL BASED ON EMBEDDED SIGNALLING" PROCEEDINGS OF THE EUROPEAN SYMPOSIUM ON RESEARCH IN COMPUTER SECURITY (ESORICS), SPRINGER VERLAG, BERLIN, DE, 16 September 1998 (1998-09-16), pages 257-274, XP000862828
- LINNARTZ J-P ET AL: "Philips Electronics response to call for proposals issued by the Data" INTERNET CITATION, 1997, XP002118336 Retrieved from the Internet: <URL:http://www.dvcc.com/dhsg, filename "philips_dhsg.rtf" under "Proposals"> [retrieved on 1999-10-11]

## Description

The present invention relates to a technical field of a decoder, a decoding method, a re-encoder, a re-encoding method, an information recording medium, a decoding program and a re-encoding program, and more specifically, a decoder and a decoding method for decoding information once encoded, a re-encoder and a re-encoding method for encoding again the decoded information, a decoding program and a re-encoding program for the decoding process and the re-encoding process, and an information recording medium having the programs recorded therein.

In recent years, the so-called MPEG method has become popular as an international standard for compressing and encoding a motion image composed of a plurality of still images.

In the composition of the motion image, which is compressed and encoded according to the MPEG method, the so-called GOP (Group of Picture) is the minimum accessible unit. Each GOP contains a plurality of types of 15 encoded still images (hereinafter, the encoded still image will be referred to as a "picture"), and thus, a motion image encoded as a whole is composed.

Now, the pictures contained in the GOP will be described. The pictures include ones described below.

That is, one GOP contains three types of pictures: an I picture (Intra-coded picture); a P picture (Predictive-coded picture); and a B picture (Bidirectionally predictive-coded picture).

The I picture refers to a picture that can be decoded to reproduce a complete still image using only the picture itself.

The P picture refers to a prediction image that is decoded by decoding a difference between itself and a prediction image reproduced through complementation using a decoded I picture or another P picture.

Furthermore, the B picture refers to a prediction image that is decoded by using not only an I picture or P picture decoded prior to the B picture but also an I picture or P picture following the B picture.

When the encoded motion image composed of the pictures is to be decoded, the P picture and the B picture are decoded by referring to the decoded I picture, another P picture or the like as described above. In European Patent EP0618734 (corresponding to Japanese Patent Laid-Open No.6-284414), for example, there is disclosed a technique of incorporating into the still image constituting the motion image and obtained as a result of such decoding, that is, each of the still images obtained by decoding the above-described pictures information indicative of what type of picture the still image is reproduced from.

In the technique disclosed in the European Patent, when decoding the encoded motion image, the information indicative of the type of the picture decoded to reproduce each of the still images constituting the motion image after decoding is incorporated in the vertical blanking interval of the still image. Furthermore, there is disclosed a technique of decoding an encoded motion image by handling it as digital information, and describing the information indicative of the type of the picture decoded to reproduce each of the still images constituting the motion image after decoding in a format associated with the still image.

However, in the case where each of the still images decoded according to the decoding method disclosed in the European Patent is encoded again, if the information indicative of the type of the picture is incorporated in the vertical blanking interval, the information is susceptible to the effect of a noise reduction circuit often used in the re-encoding, and cannot be used for transmission as digital information after the re-encoding.

In the case where the information indicative of the type of the picture is described in the format as digital information, if the still image is converted into another format during the re-encoding, the original information indicative of the type of picture may be erased.

Therefore, in both cases, the information indicative of the type of the picture cannot be used in the re-encoding, resulting in the problem of degradation in the quality of the re-encoded still image.

BLOOM J A ET AL: 'COPY PROTECTION FOR DVD VIDEO', PROCEEDINGS OF THE IEEE, IEEE, NEW YORK, US, vol. 87, no. 7, July 1999, pages 1267-1276, XP000861525, ISSN: 0018-9219 and the European patent publication EP-A-1 047 067 disclose methods for the embedding of copy control information in images in the form of watermarks.

Thus, the present invention is devised in view of the above-described problems, and an object of the present invention is to provide a decoder and decoding method that can minimize degradation in the quality of information even when encoded information obtained by encoding a motion image or the like is repeatedly decoded and re-encoded, a re-encoder and a re-encoding method for conducting the re-encoding, a decoding program for the decoding embodied on computer-readable medium, a re-encoding program for the re-encoding embodied on computer-readable medium.

The above object of the present invention can be achieved by a decoder in accordance with claim 1.

The above object of the present invention can be achieved by a decoding method which generates decoded information by decoding encoded information, in accordance with claim 9.

The above object of the present invention can be achieved by an information recording medium having a decoding program recorded therein so as to be read by a decoding computer in accordance with claim 17.

In the Drawings;
FIG. 1 a diagram showing an example of a plurality of pictures constituting one GOP;
FIG. 2 is a block diagram showing a schematic configuration of a set-top box according to a first embodiment;
FIG. 3 is a flow chart illustrating a decoding process according to the first embodiment;
FIG. 4 is a schematic diagram illustrating a status of a motion image before and after the decoding process according to the first embodiment; and
FIG. 5 is a block diagram showing a schematic configuration of a recorder/player according to the first embodiment.

Now, a preferred embodiment of the present invention will be described with reference to the drawings.

The embodiment described below is an embodiment of the invention applied to an AV (Audio/Visual) system which is provided with: a set-top box serving as a decoder for decoding a motion image compressed and encoded according to the MPEG method described above and distributed on a broadcasting radio wave; and a recorder/player including an information recording apparatus for encoding the decoded motion image again and recording the motion image on an optical disc.

### (I) Embodiment of GOP

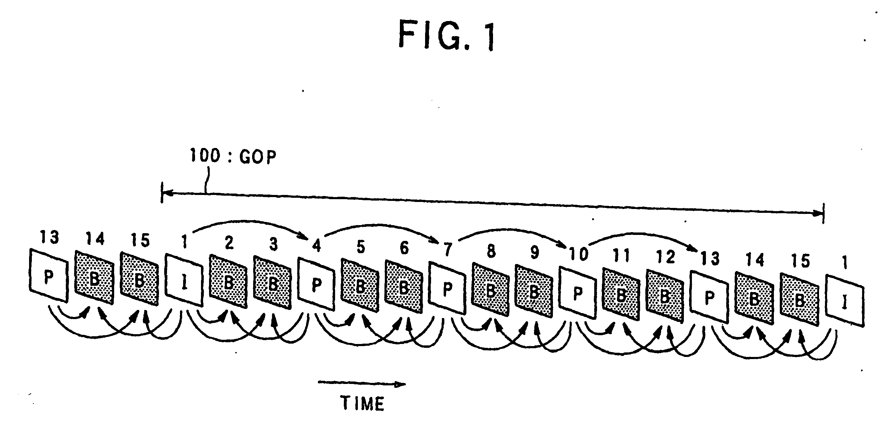

Before describing a specific embodiment, a configuration of the above-described GOP, that is, a configuration of the GOP constituting the compressed and encoded motion image distributed to the set-top box will be described with reference to FIG. 1. FIG. 1 shows an example of a plurality of pictures constituting one GOP.

The motion image in the distribution stage is composed of information units referred to as video packs, each of which contains one or more GOP. FIG. 1 shows a case where one GOP 100 is composed of 15 pictures substantially equivalent to 0.5 seconds of replay time. This number of pictures is illustrative, and one GOP 100 may contain various numbers of pictures in the MPEG method.

The 15 pictures include one leading I picture, and four P pictures and ten B pictures in the order shown in FIG. 1, which have a prediction relationship (interpolation relationship) therebetween indicated by arrows in FIG. 1.

In the MPEG method, a variable rate encoding method in which quantity of data contained in each GOP is varied is adopted.

Specifically, if the pictures in one GOP is provided for a fast original motion image and the correlation between the pictures is low, the quantity of data for constructing each of the pictures is increased, so that the quantity of data contained in one GOP 100 is increased.

On the other hand, if the pictures in one GOP 100 is provided for an original motion image that is poor in motion and the correlation between the pictures is high, the quantity of data for constructing each of the pictures is reduced, so that the quantity of data contained in one GOP 100 is reduced.

As described above, according to the MPEG method, since the still images constituting the motion image are encoded on a GOP-by-GOP basis, the motion image can be edited per the GOP 100 as the minimum unit, and since one P picture is contained per a preset number of B pictures, the original motion image can be compressed and encoded with a high compressibility.

### (II) Embodiment of AV System

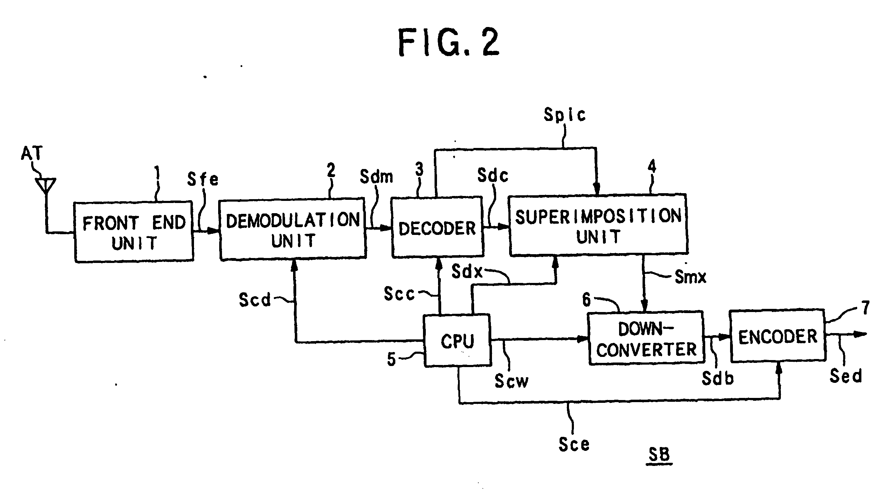

Next, an embodiment of an AV system according to this invention will be described with reference to FIGS. 2 to 5.

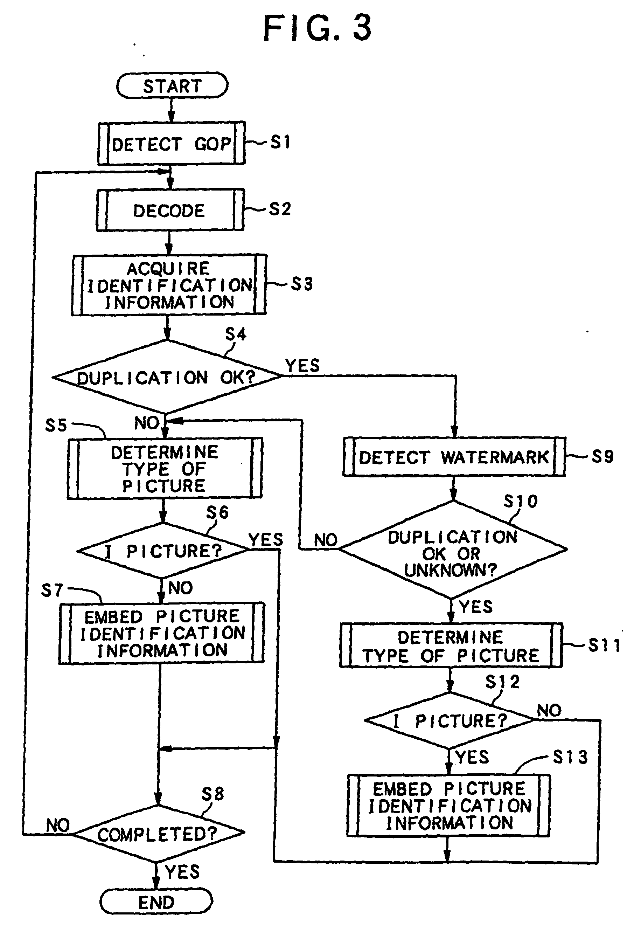

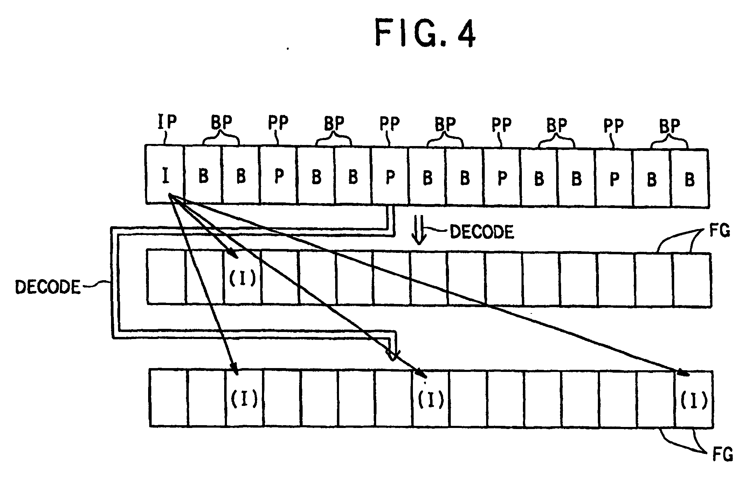

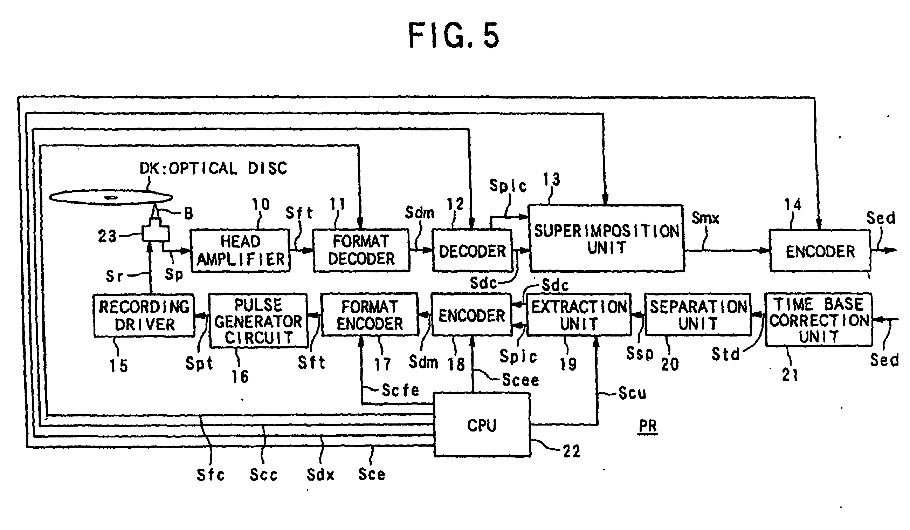

FIG. 2 is a block diagram showing a schematic configuration of a set-top box according to this embodiment, FIG. 3 is a flow chart illustrating a decoding process conducted in the set-top box, FIG. 4 is a schematic diagram illustrating a status of the motion image before and after the decoding process, and FIG. 5 is a block diagram showing a schematic configuration of a recorder/player according to this embodiment.

As shown in FIG. 2, a set-top box SB according to this embodiment is provided with a front end unit 1 having an antenna AT; a demodulation unit 2; a decoder 3 serving as a detection device; a superimposition unit 4 serving as a generation device; a CPU 5; a down-converter 6; and an encoder 7.

Now, a schematic operation thereof will be described.

First, the motion image information and audio information associated therewith that are distributed after compression and encoding are received by the antenna AT, subject to a preset receipt processing such as amplification in the front end unit 1, and output to the demodulation unit 2 in the form of a reception signal Sfe.

Then, based on a control signal Scd from the CPU 5, the demodulation unit 2 performs a descrambling process for decryption and a demultiplexing process for separating the motion image information from the audio information on the output reception signal Sfe, and outputs a demodulated signal Sdm to the decoder 3. At this time, the separated motion image information contained in the demodulated signal Sdm contains the above-described GOP 100.

Furthermore, based on a control signal Scc from the CPU 5, the decoder 3 decodes the motion image information and the audio information contained in the demodulated signal Sdm according to the MPEG method to generate a decoded signal Sdc containing the encoded motion image information and audio information and outputs the decoded signal Sdc to the superimposition unit 4.

Simultaneously, for the still images in the decoded motion image information, the decoder 3 outputs to the superimposition unit 4 a picture signal Spic, which is information indicative of the still image reproduced from the I picture in the GOP 100 before being decoded.

In this way, based on the picture signal Spic and a control signal Sdx from the CPU 5 and according to watermark method, the superimposition unit 4 embeds the picture signal Spic in the still image (decoded still image) in the decoded signal Sdc input at the time when the picture signal Spic is generated and outputs a superimposed signal Smx to the down-converter 6.

Then, based on a control signal Scw from the CPU 5, the down-converter 6 converts the decoded motion image information contained in the superimposed signal Smx into an image signal conforming to the NTSC (National Television System Committee) and outputs a converted signal Sdb to the encoder 7.

Finally, the encoder 7 performs a demodulation or the like according to the NTSC method on the converted signal Sdb and outputs an output signal Sed to a recorder/player described in detail later.

In parallel with this process, the CPU 5 generates the respective control signals described above to control comprehensively the operation of the set-top box SB.

Next, the decoding process according to this embodiment conducted in the decoder 3 and the superimposition unit 4 will be described with reference to FIGS. 2 to 4.

The decoding process is conducted on the assumption that the motion image information and the audio information received via the front end unit 1 are composed of information sectors each containing the motion image itself or sound itself composed of the above-described video packs, respectively, the information sector contains, at the head thereof, identification information indicative of whether or not the motion image information and the audio information are prohibited from being duplicated into another information recording medium or the like after being decoded, and the identification information is embedded also in the motion image information and the audio information themselves (that is, part other than the identification information) according to the watermark method.

As shown in FIG. 2, in the decoding process mainly conducted in the decoder 3 and the superimposition unit 4, first, the decoder 3 detects the head of each GOP 100 contained in the demodulated signal Sdm generated in the demodulation unit 2 (step S1), and then conducts the decoding process for the detected GOP 100 (step S2).

Specifically, in the detection of the GOP 100, the detection of the head of one GOP 100 attained by detecting the I picture contained in the demodulated signal Sdm is regarded as the detection of the GOP 100.

Then, the identification information contained at the head of the information sector, which is an information unit of the demodulated information Smd before being decoded is detected (step S3), and based on the identification information, it is determined whether or not the motion image information and the audio information input in the form of the demodulated information Sdm are those prohibited from being duplicated (step S4).

Then, as a result of the determination based on the identification information, if it is determined that the motion image information and the audio information input in the form of the demodulated information Sdm are those permitted to be duplicated (if YES in step S4), then, the identification information embedded in the motion image information or audio information itself as a watermark as the assumption for the decoding process of the first embodiment as described above is detected (step S9), and based on the detected identification information, it is determined whether the motion image information or the audio information is permitted to be duplicated or it is unknown due to a failure in detection of the watermark whether the copy is permitted or not (step S10).

If it is determined that the motion image information and the audio information are not permitted to be duplicated (if NO in step S10), then the process continues to step S5. On the other hand, if it is determined that it is unknown whether the motion image information or the audio information is permitted to be duplicated or not due to a failure in detection of the watermark (if YES in step S10), the type of the picture contained in the demodulated signal Sdm input at that timing, specifically, I picture, P picture, or B picture, is determined (step S11).

Then, it is determined whether or not the picture input at that timing is an I picture in the detection in step S11 (step S12), and if it is determined to be the I picture (if YES in step S12), the picture signal Spic indicative of the I picture is generated and output to the superimposition unit 4. The superimposition unit 4 embeds the received picture signal Spic (that is, picture signal Spic indicating that the still image is decoded from the I picture in the GOP 100 before being decoded) as the watermark in the still image in the decoded signal Sdc, which is decoded by the decoder 3 and input to the superimposition unit 4 at the same timing (step S13), to generate the superimposed signal Smx and outputs it to the down-converter 6, and then, the process continues to step S8.

A specific method for embedding the picture signal Spic in step S13 is explained as follows: for example, a picture signal Spic can be embedded by setting two least significant bits of pixel data at the address of (0, 0) in a still image decoded from an I picture to "1", setting two least significant bits of pixel data at the address of (0, 0) in a still image decoded from a picture other than the I picture to "0", setting two least significant bits of pixel data at the address of (0, 1) in the still image decoded from the I picture to "0", and setting two least significant bits of pixel data at the address of (0, 2) in the still image decoded from an I picture to "1". As a result, the two least significant bits of the pixel data at the address of (0, 0) in the still image decoded from the I picture are all set to "1", the two least significant bits of the pixel data at the address of (0, 1) in the still image decoded from the I picture are all set to "0", and the two least significant bits of the pixel data at the address of (0, 2) in the still image decoded from the I picture are all set to "1", and thereby the still image decoded from the I picture has a data pattern rarely appearing in typical reproduced still images so that the picture signal Spic can be embedded therein so as to be identified.

Then, it is checked whether or not the decoding process is completed for all the pictures (step S8), and if the process is completed (if YES in step S8), the sequence of the decoding process is ended. On the other hand, if the GOP 100 contains a picture not decoded (if NO in step S8), the process continues to step S2 to perform the above-described decoding process on the picture.

If it is determined that the picture input is not the I picture in the determination in step S12 (if NO in step S12), the process continues to step S8 by passing the above-described embedding (step S13) of the picture signal Spic.

In the determination in step S4, if it is determined, based on the identification information contained at the head of the information sector, that the motion image information and the audio information input in the form of the demodulated information Sdm are not those permitted to be duplicated (if NO in step S4), then the type of the received picture contained in the demodulated signal Sdm is detected as in the processing in step S11 described above (step S5), and it is determined whether the picture is determined to be the I picture or not (step S6).

Then, if the picture is determined to be the I picture in the determination in step S6 (if YES in step S6), the process continues to step S8 bypassing the embedding of the picture signal Spic.

On the other hand, if the picture is determined not to be the I picture in the determination in step S6 (if NO in step S6), one still image decoded from a picture other than the I picture in the GOP 100 before being decoded is selected, or one still image decoded is randomly selected, and the picture signal Spic is embedded in the selected still image as dummy information according to the watermark method in the superimposition unit 4 (step S7) to generate the superimposed signal Smx, the superimposition signal Smx is output to the down-converter 6, and then the process continues to step S8.

Specifically, in the processing in step S7, as shown in FIG. 4, the picture signal Spic indicating that a still image is the still image FG decoded from the I picture is embedded in one of the still images FG reproduced from pictures other than the I picture in the GOP 100 before being decoded (see the second stage in FIG. 4), or randomly embedded in a number of still images FG, the number being associated with the original GOP (see bottom stage in FIG. 4).

Now, a recorder/player according to the first embodiment will be described with reference to FIG. 5.

FIG. 5 shows a recorder/player having a recording function of encoding again the output signal Sed generated through the decoding process in the set-top box SB described with reference to FIGS. 1 to 4 and optically recording the same in an optical disk DK, and a decoding function of decoding the motion image information and the audio information recorded in the optical disk DK according to, for example, the MPEG method through the same process as in the set-top box SB.

As shown in FIG. 5, the recorder/player PR according to the first embodiment is provided with: a pickup 23; a head amplifier 10; a format decoder 11; a decoder 12; a superimposition unit 13; an encoder 14; a recording driver 15; a pulse generator circuit 16; a format encoder 17; an encoder 18 serving as an encoding device; an extraction unit 19 serving as a detecting device; a separation unit 20; a time base correction unit 21; and a CPU 22. The pickup 23, the recording driver 15, the pulse generator circuit 16, the format encoder 17, the encoder 18, the extraction unit 19, the separation unit 20, the time base correction unit 21 and the CPU 22 of which are responsible for the recording function, and the pickup 23, the head amplifier 10, the format decoder 11, the decoder 12, the superimposition unit 13, the encoder 14 and the CPU 22 of which are responsible for the decoding function.

Now, an operation thereof will be described.

First, the operation of the components responsible for the decoding function will be described.

First, the pickup 23 irradiates the optical disk DK having the motion image information recorded therein with a light beam B for information reproduction, receives the reflected light, generates a detection signal Sp varying with the change in the reception intensity thereof, and outputs the detection signal to the head amplifier 10.

Then, the head amplifier 10 amplifies the detection signal Sp with a preset amplification factor to generate an amplified signal Sft, and output the amplified signal to the format decoder 11. The motion image information contained in the amplified signal Sft includes the GOP 100 described above.

Based on the control signal Sfc from the CPU 22, the format decoder 11 interprets the format structure of the motion image information contained in the amplified signal Sft, separates the motion image information from other control information, generates a demodulated signal Sdm similar to that in the set-top box SB, and outputs the demodulated signal to the decoder 12.

Then, based on the control signals Scc and Sdx from the CPU 22, respectively, the decoder 12 and the superimposition unit 13 performs exactly the same processes in the decoder 3 and the superimposition unit 4 in the set-top box SB (specifically, the decoding and the embedding of the picture signal Spic described above with reference to FIGS. 2 to 4), and the superimposition unit 13 generates a superimposed signal Smx containing the motion image information composed of the still image decoded and having the picture signal Spic embedded therein and outputs the superimposed signal to the encoder 14.

Then, based on the control signal Sce from the CPU 22, the encoder 14 performs a demodulation according to the NTSC or the like on the superimposed signal Smx in the same manner as the encoder 7 in the set-top box SB, and outputs an output signal Sed to an external display, speaker, or the like.

Next, the operation of the components responsible for the recording function will be described.

First, the output signal Sed output from the set-top box SB is input to the time base correction unit 21. Then, the time base correction unit 21 performs a time base correction on the output signal Sed to generate a correction signal Std, and outputs the correction signal Std to the separation unit 20.

Next, the separation unit 20 separates the correction signal Std into a luminance signal (Y signal) and a color signal (C signal), and separately outputs the luminance signal and the color signal as a separation signal Ssp to the extraction unit 19.

Then, based on the control signal Scu from the CPU 22, the extraction unit 19 extracts the picture signal Spic contained in the separation signal Ssp as the watermark from the separation signal Ssp, outputs the extracted picture signal Spic to the encoder 18 as it is, and besides the picture signal Spic, outputs the separation signal Ssp after extraction of the picture signal Spic to the encoder 18 as the decoded signal Sdc.

Based on the control signal Scee from the CPU 22 and according to the MPEG method, the encoder 18 re-encodes the decoded signal Sdc by forming the GOP 100 in such a manner that the I picture in the GOP 100 after being encoded is generated from the still image having the picture signal Spic embedded therein in the decoded signal Sdc, generates the demodulated signal Sdm and outputs the demodulated signal to the format encoder 17. In this re-encoding, the pictures in the GOP 100 other than the I picture are generated in the basis of the I picture generated again from the still image decoded from the I picture in the original GOP 100 before being decoded.

In the case where the picture signal Spic is embedded in the still image decoded from a picture other than the I picture in the GOP 100 before being decoded as described above with reference to FIG. 4, the re-encoding results in a new GOP 100 being formed in the basis of an picture (serving as an I picture) other than the I picture in the GOP 100 before being decoded, so that the quality of the image for the motion image information containing the new GOP 100 is degraded.

Then, based on the control signal Scfe from the CPU 22, the format encoder 17 hierarchically formats the demodulated information Sdm according to the format of the MPEG method to generate a formatted signal Sft, and outputs the formatted signal to the pulse generator circuit 16.

Then, the pulse generator circuit 16 generates a drive signal Spl for driving the recording driver 15, the drive signal having an intensity variation associated with the information contained in the formatted signal Sft, and outputs the drive signal to the recording driver 15.

Then, in response to the drive signal Spl, the recording driver 15 generates a laser driving signal Sr for driving a semiconductor laser (not shown) in the pickup 23, and outputs the laser driving signal to the pickup 23. At this time, the laser driving signal Sr has an intensity variation associated with the variation pits (or marks) formed on the optical disc DK when the motion image information contained in the original output signal Sed is recorded in the optical disc DK.

Finally, the semiconductor laser (not shown) in the pick up 23 irradiates the optical disc DK with a light beam B for recording having an intensity variation represented by the laser driving signal Sr, and thereby the pits or marks are formed on the optical disc and the motion image information is recorded.

In parallel with this process, the CPU22 generates the respective control signals described above to control comprehensively the operation of the recorder/player PR.

As described above, in the operations of the set-top box SB and the recorder/player PR according to this embodiment, since the output signal Sed is generated by embedding in a still image the picture signal Spic indicating that the still image is one decoded from the I picture in the GOP 100 as a watermark, and the output signal Sed is re-encoded in the recorder/player PR by using the embedded picture signal Spic, the re-encoding also results in the I picture being generated from the still image decoded from the I picture in the GOP 100 before being decoded, and the other pictures in the GOP 100 can be generated with respect to the I picture generated by the re-encoding. As a result, compared to the re-encoding not using the picture signal Spic, the quality of the motion image information after being re-encoded can be improved.

In addition, since the output signal Sed is generated with the picture signal Spic being embedded in the still image, the picture signal Spic is not lost in the re-encoding.

In addition, since the re-encoding using the picture signal Spic can be accomplished only when the output signal Sed is permitted to be duplicated, the quality of the image after the output signal Sed permitted to be duplicated is re-encoded can be improved.

In addition, since the precise picture signal Spic cannot be used when the output signal is not permitted to be duplicated, the quality of the image for the motion image information cannot be maintained in the re-encoding in the case of illegally duplicating the output signal Sed not permitted to be duplicated, and consequently, the copy of the output signal Sed can be restricted.

In addition, since the picture signal Spic is embedded by digital watermarking, the picture signal Spic can be prevented from being lost in the re-encoding while enhancing the secrecy of the picture signal Spic.

In addition, since the recorder/player PR encodes the output signal Sed again using the picture signal Spic extracted from the output signal Sed, compared to the re-encoding not using the picture signal Spic, the quality of the image for the motion image information after being re-encoded can be improved.

In the structure of the set-top box SB described above (see FIG. 2), the superimposition unit 4 is disposed between the decoder 3 and the down-converter 6. However, the superimposition unit 4 may be disposed not at the position shown in FIG. 2 but between the down-converter 6 and the encoder 7 in FIG. 2 so that the picture signal Spic is input from the decoder 3 to the superimposition unit 4.

In addition, in the embodiment described above, the picture signal Spic is one indicating that the picture before being decoded associated therewith is the I picture. Assuming that the number of pictures in one GOP 100 and the order of the pictures in one GOP 100 in terms of the types thereof are fixed, however, the information indicating that the picture before being decoded associated therewith is a B picture or P picture may be used as the picture signal Spic.

In such a case, only if the picture before being decoded can be determined to be a B picture or P picture, the still image for which the picture before being decoded is the I picture can be specified.

In addition, while in the embodiment described above, the information indicating that the picture currently being decoded is the I picture is used as the picture signal Spic, the picture signal Spic may be information indicating that the picture following the picture currently being decoded is the I picture or that the picture ahead by a preset number of the picture currently being decoded, and superimposed on the still image currently reproduced by decoding.

In this case again, the still image for which the picture before being decoded is the I picture can be specified.

Alternatively, a general-purpose microcomputer may be made to serve as the CPU 5 or 22 by recording a program ready for the operation of the set-top box SB or recorder/player PR in a flexible disc, hard disc, semiconductor memory or the like, and reading and executing the program with the microcomputer.

## Claims

1. A decoder (SB) which generates decoded information by decoding information encoded in accordance with the MPEG method, **characterised by** comprising:
a detection device (3) which detects the type of an MPEG encoded picture in the encoded in-formation based on the encoded information;
and
a generation device (4) which generates the decoded information containing image information by decoding the encoded information based on the detected type of picture; wherein
the generation device (4) embeds a picture signal indicative of the detected type of picture in the decoded information; and wherein
the generation device (4) embeds the type of picture information in the image information only when copy of the encoded information is permitted to be executed.

2. The decoder (SB) according to Claim 1, wherein
the generation device (4) embeds dummy information different from the type of picture information in the image information only when copy of the encoded information is prohibited from being executed.

3. The decoder (SB) according to Claim 1, wherein the generation device embeds (4) the type of picture information in the image information by digital watermarking.

4. The decoder (SB) according to Claim 2, wherein
the generation device (4) embeds the dummy information in the image information by digital watermarking.

5. The decoder (SB) according to Claim 1, wherein
the encoded information contains copy control information that restricts copy of the decoded information, and
the generation device (4) generates the de-coded information and embeds the type of picture information therein only when the copy control in formation is information for permitting the copy to be executed.

6. The decoder (SB) according to Claim 1, wherein
the encoded information contains copy control information that restricts copy of the decoded information, and
the generation device (4) generates the decoded information by embedding dummy information different from the type of picture information therein only when the copy control information is information for prohibiting the copy from being executed.

7. The decoder (SB) according to Claim 1, wherein
the encoded information is compressed motion image information comprising a plurality of compressed still images, and
the embedded picture signal is type information indicative of the type of the still image.

8. The decoder (SB) according to Claim 7, wherein
the compressed motion image information is compressed according to an MPEG (Moving Picture Experts Group) method, and
the type information indicates that the still image is an intra-coded picture.

9. A decoding method which generates decoded information by decoding information encoded in accordance with the MPEG method, **characterised by** comprising:
a detecting process which detects the type of an MPEG encoded picture in the encoded information based on the encoded information; and
a generating process which generates the decoded information containing image information by decoding the encoded information based on the detected type of the picture, wherein,
in the generation process a picture signal indicative of the detected type of picture is embedded in the decoded information; and
in the generating process, the type of picture information is embedded in the image information only when copy of the encoded information is permitted to be executed.

10. The decoding method according to Claim 9, wherein
in the generating process, dummy information different from the type of picture information is embedded in the image information only when copy of the encoded information is prohibited from being executed.

11. The decoding method according to Claim 10, wherein
in the generating process, the dummy information is embedded in the image information by digital watermarking.

12. The decoding method according to Claim 9, wherein in the generating process, the type of picture information is embedded in image information by digital watermarking.

13. The decoding method according to Claim 9, wherein
the encoded information contains copy control information that restricts copy of the decoded information, and
in the generating process, the decoded information is generated and the type of picture information therein only when the copy control information is information for permitting the copy to be executed.

14. The decoding method according to Claim 9, wherein
the encoded information contains copy control information that restricts copy of the decoded information, and
in the generating process, the decoded information is generated and dummy information different from the type of picture information is embedded therein only when the copy control information is information for prohibiting the copy from being executed.

15. The decoding method according to Claim 9, wherein
the encoded information is compressed motion image information composed of a plurality of compressed still images, and
the embedded picture signal is type information indicative of the type of the still image.

16. The decoding method according to Claim 15, wherein
the compressed motion image information is compressed according to an MPEG method, and the type information indicates that the still image is an intra-coded picture.

17. An information recording medium having a decoding program recorded therein so as to be read by a decoding computer included in a decoder (SB) which generates decoded information by-decoding information encoded in accordance with the MPEG method, wherein the decoding program causes the decoding computer to function as:
a detection device (3) which detects a type of an MPEG encoded picture in the encoded in-formation based on the encoded information; and
a generation device (4) which generates the decoded information containing image information by decoding the encoded information based on the detected type of a picture,
the decoding program **characterized by** causing the decoding computer to function so that:
the generation device (4) embeds a picture signal indicative of the detected type of picture in the decoded information, wherein the generation device (4) embeds the type of picture information in the image information only when copy of the encoded information is permitted to be executed.

18. The information recording medium according to Claim 17, the generation device (4) embeds dummy information different from the type of picture information only when copy of the encoded information is prohibited from being executed.

19. The information recording medium according to Claim 18, the generation device (4) embeds the dummy information in the image information by digital watermarking.

20. The information recording medium according to claim 17, wherein the generation device (4) embeds the type of picture information in the image information by digital watermarking.

21. The information recording medium according to Claim 17, wherein
the encoded information contains copy control information that restricts copy of the decoded information, and
the generation device (4) generates the de-coded information and embeds the type of picture information therein only when the copy control in formation is information for permitting the copy to be executed.

22. The information recording medium according to Claim 17, wherein
the encoded information contains copy control information that restricts copy of the decoded information, and
the generation device (4) generates the de-coded information by embedding dummy information different from the picture signal therein only when the copy control information is information for prohibiting the copy from being executed.

## Patentansprüche

1. Decoder (SB), der decodierte Informationen erzeugt durch das Decodieren von Informationen, die entsprechend dem MPEG-Verfahren codiert sind, **dadurch gekennzeichnet, dass** er Folgendes umfasst:
eine Erkennungseinrichtung (3), die auf der Grundlage der codierten Informationen den Typ eines MPEG-codiertes Bildes in den codierten informationen erkennt,
und
eine Erzeugungseinrichtung (4), welche die decodierten Informationen, die Bildinformationen enthalten, erzeugt durch das Decodieren der codierten Informationen auf der Grundlage des erkannten Bildtyps, wobei
die Erzeugungseinrichtung (4) ein Bildsignal, das den erkannten Bildtyp anzeigt, in die decodierten Informationen einbettet und wobei
die Erzeugungseinrichtung (4) nur dann die Bildtypinformationen in die Bildinformationen einbettet, wenn es erlaubt ist, dass eine Kopie der codierten Informationen ausgeführt wird.

2. Decoder (SB) nach Anspruch 1, wobei
die Erzeugungseinrichtung (4) nur dann Scheininformationen, die sich von den Bildtypinformationen unterscheiden, in die Bildinformationen einbettet, wenn es untersagt ist, dass eine Kopie der codierten Informationen ausgeführt wird.

3. Decoder (SB) nach Anspruch 1, wobei die Erzeugungseinrichtung (4) die Bildtypinformationen durch digitale Wasserzeichenmarkierung in die Bildinformationen einbettet.

4. Decoder (SB) nach Anspruch 2, wobei
die Erzeugungseinrichtung (4) die Scheinformationen durch digitale Wasserzeichenmarkierung in die Bildinformationen einbettet.

5. Decoder (SB) nach Anspruch 1, wobei
die codierten Informationen Kopiersteuerungsinformationen enthalten, die das Kopieren der decodierten Informationen einschränken, und
die Erzeugungseinrichtung (4) nur dann die decodierten Informationen erzeugt und die Bildtypinformationen darin einbettet, wenn die Kopiersteuerungsinformationen Informationen sind, um es zu erlauben, dass die Kopie ausgeführt wird.

6. Decoder (SB) nach Anspruch 1, wobei
die codierten Informationen Kopiersteuerungsinformationen enthalten, die das Kopieren der decodierten Informationen einschränken, und
die Erzeugungseinrichtung (4) nur dann die decodierten Informationen erzeugt durch das Einbetten von Scheininformationen, die sich von den Bildtypinformationen unterscheiden, in dieselben, wenn die Kopiersteuerungsinformationen Informationen sind, um es zu untersagen, dass die Kopie ausgeführt wird.

7. Decoder (SB) nach Anspruch 1, wobei
die codierten Informationen komprimierte Bewegtbildinformationen sind, die mehrere komprimierte Standbilder umfassen, und
das eingebettete Bildsignal Typinformationen sind, die den Typ des Standbildes anzeigen.

8. Decoder (SB) nach Anspruch 7, wobei
die komprimierten Bewegtbildinformationen entsprechend einem MPEG (Moving Picture Experts Group) -Verfahren komprimiert sind und
die Typinformationen anzeigen, dass das Standbild ein intracodiertes Bild ist.

9. Decodierungsverfahren, das decodierte Informationen erzeugt durch das Decodieren von Informationen, die entsprechend dem MPEG-Verfahren codiert sind, **dadurch gekennzeichnet, dass** es Folgendes umfasst:
einen Erkennungsvorgang, der auf der Grundlage der codierten Informationen den Typ eines MPEG-codiertes Bildes in den codierten Informationen erkennt, und
einen Erzeugungsvorgang, der die decodierten Informationen, die Bildinformationen enthalten, erzeugt durch das Decodieren der codierten Informationen auf der Grundlage des erkannten Bildtyps, wobei
bei dem Erzeugungsvorgang ein Bildsignal, das den erkannten Bildtyp anzeigt, in die decodierten Informationen eingebettet wird und
bei dem Erzeugungsvorgang nur dann die Bildtypinformationen in die Bildinformationen eingebettet werden, wenn es erlaubt ist, dass eine Kopie der codierten Informationen ausgeführt wird.

10. Decodierungsverfahren nach Anspruch 9, wobei
bei dem Erzeugungsvorgang nur dann Scheininformationen, die sich von den Bildtypinformationen unterscheiden, in die Bildinformationen eingebettet werden, wenn es untersagt ist, dass eine Kopie der codierten Informationen ausgeführt wird.

11. Decodierungsverfahren nach Anspruch 10, wobei
bei dem Erzeugungsvorgang die Scheinformationen durch digitale Wasserzeichenmarkierung in die Bildinformationen eingebettet werden.

12. Decodierungsverfahren nach Anspruch 9, wobei bei dem Erzeugungsvorgang die Bildtypinformationen durch digitale Wasserzeichenmarkierung in die Bildinformationen eingebettet werden.

13. Decodierungsverfahren nach Anspruch 9, wobei
die codierten Informationen Kopiersteuerungsinformationen enthalten, die das Kopieren der decodierten Informationen einschränken, und
bei dem Erzeugungsvorgang nur dann die decodierten Informationen erzeugt und die Bildtypinformationen darin eingebettet werden, wenn die Kopiersteuerungsinformationen Informationen sind, um es zu erlauben, dass die Kopie ausgeführt wird.

14. Decodierungsverfahren nach Anspruch 9, wobei
die codierten Informationen Kopiersteuerungsinformationen enthalten, die das Kopieren der decodierten Informationen einschränken, und
bei dem Erzeugungsvorgang nur dann die decodierten Informationen erzeugt und Scheininformationen, die sich von den Bildtypinformationen unterscheiden, darin eingebettet werden, wenn die Kopiersteuerungsinformationen Informationen sind, um es zu untersagen, dass die Kopie ausgeführt wird.

15. Decodierungsverfahren nach Anspruch 9, wobei
die codierten Informationen komprimierte Bewegtbildinformationen sind, die aus mehrere komprimierte Standbilder zusammengesetzt sind, und
das eingebettete Bildsignal Typinformationen sind, die den Typ des Standbildes anzeigen.

16. Decodierungsverfahren nach Anspruch 15, wobei
die komprimierten Bewegtbildinformationen entsprechend einem MPEG-Verfahren komprimiert sind und die Typinformationen anzeigen, dass das Standbild ein intracodiertes Bild ist.

17. Informationsaufzeichnungsmedium, das ein darin aufgezeichnetes Dekodierungsprogramm hat, so dass es durch einen Decodierungsrechner gelesen wird, der in einem Decoder (SB) eingeschlossen ist, der decodierte Informationen erzeugt durch das Decodieren von Informationen, die entsprechend dem MPEG-Verfahren codiert sind, wobei das Dekodierungsprogramm veranlasst, dass der Decodierungsrechner fungiert als:
eine Erkennungseinrichtung (3), die auf der Grundlage der codierten Informationen den Typ eines MPEG-codiertes Bildes in den codierten Informationen erkennt, und
eine Erzeugungseinrichtung (4), welche die decodierten Informationen, die Bildinformationen enthalten, erzeugt durch das Decodieren der codierten Informationen auf der Grundlage des erkannten Bildtyps,
wobei das Dekodierungsprogramm **dadurch gekennzeichnet ist, dass** es veranlasst, dass der Decodierungsrechner so funktioniert, dass:
die Erzeugungseinrichtung (4) ein Bildsignal, das den erkannten Bildtyp anzeigt, in die decodierten Informationen einbettet, wobei die Erzeugungseinrichtung (4) nur dann die Bildtypinformationen in die Bildinformationen einbettet, wenn es erlaubt ist, dass eine Kopie der codierten Informationen ausgeführt wird.

18. Informationsaufzeichnungsmedium nach Anspruch 17, wobei die Erzeugungseinrichtung (4) nur dann Scheininformationen, die sich von den Bildtypinformationen unterscheiden, einbettet, wenn es untersagt ist, dass eine Kopie der codierten Informationen ausgeführt wird.

19. Informationsaufzeichnungsmedium nach Anspruch 18, wobei die Erzeugungseinrichtung (4) die Scheinformationen durch digitale Wasserzeichenmarkierung in die Bildinformationen einbettet.

20. Informationsaufzeichnungsmedium nach Anspruch 17, wobei die Erzeugungseinrichtung (4) die Bildtypinformationen durch digitale Wasserzeichenmarkierung in die Bildinformationen einbettet.

21. Informationsaufzeichnungsmedium nach Anspruch 17, wobei
die codierten Informationen Kopiersteuerungsinformationen enthalten, die das Kopieren der decodierten informationen einschränken, und
die Erzeugungseinrichtung (4) nur dann die decodierten Informationen erzeugt und die Bildtypinformationen darin einbettet, wenn die Kopiersteuerungsinformationen Informationen sind, um es zu erlauben, dass die Kopie ausgeführt wird.

22. Informationsaufzeichnungsmedium nach Anspruch 17, wobei
die codierten Informationen Kopiersteuerungsinformationen enthalten, die das Kopieren der decodierten Informationen einschränken, und
die Erzeugungseinrichtung (4) nur dann die decodierten informationen erzeugt durch das Einbetten von Scheininformationen, die sich von den Bildtypinformationen unterscheiden, in dieselben, wenn die Kopiersteuerungsinformationen Informationen sind, um es zu untersagen, dass die Kopie ausgeführt wird.

## Revendications

1. Décodeur (SB) qui génère des données décodées en décodant des données codées suivant le procédé MPEG, **caractérisé en ce qu'**il comporte :
un dispositif de détection (3) qui détecte le type d'une image à codage MPEG dans les données codées sur la base des données codées ;
et
un dispositif de génération (4) qui génère les données décodées contenant des données d'image en décodant les données codées sur la base du type d'image détecté ; dans lequel
le dispositif de génération (4) imbrique un signal d'image qui indique le type d'image détecté dans les données décodées ; et dans lequel
le dispositif de génération (4) imbrique les données de type d'image dans les données d'image seulement quand il est permis d'exécuter une copie des données codées.

2. Décodeur (SB) selon la revendication 1, dans lequel
le dispositif de génération (4) imbrique des données factices qui diffèrent des données du type d'image dans les données d'image seulement quand il est interdit d'exécuter une copie des données codées.

3. Décodeur (SB) selon la revendication 1, dans lequel le dispositif de génération (4) imbrique les données de type d'image dans les données d'image par filigranage numérique.

4. Décodeur (SB) selon la revendication 2, dans lequel
le dispositif de génération (4) imbrique les données factices dans les données d'image par filigranage numérique.

5. Décodeur (SB) selon la revendication 1, dans lequel
les données codées contiennent des données de contrôle de copie qui restreignent la copie des données décodées, et
le dispositif de génération (4) génère les données décodées et y imbrique les données de type d'image seulement quand les données de contrôle de copie sont des données permettant une exécution de la copie.

6. Décodeur (SB) selon la revendication 1, dans lequel
les données codées contiennent des données de contrôle de copie qui restreignent la copie des données décodées, et
le dispositif de génération (4) génère les données décodées en y imbriquant des données factices qui diffèrent des données de type d'image seulement quand les données de contrôle de copie sont des données interdisant une exécution de la copie.

7. Décodeur (SB) selon la revendication 1, dans lequel
les données codées sont des données vidéo comprimées comprenant une pluralité d'images fixes comprimées, et
le signal d'image imbriqué est constitué des données de type qui indiquent le type d'image fixe.

8. Décodeur (SB) selon la revendication 7, dans lequel
les données vidéo comprimées sont comprimées suivant un procédé MPEG (Moving Picture Experts Group), et
les données de type indiquent que l'image fixe est une image à codage intra.

9. Procédé de décodage qui génère des données décodées en décodant des données codées suivant le procédé MPEG, **caractérisé en ce qu'**il comporte :
un procédé de détection qui détecte le type d'une image à codage MPEG dans les données codées sur la base des données codées ; et
un procédé de génération qui génère les données décodées contenant des données d'image en décodant les données codées sur la base du type d'image détecté, dans lequel,
dans le procédé de génération un signal d'image qui indique le type d'image détecté est imbriqué dans les données décodées ; et
dans le procédé de génération, les données de type d'image sont imbriquées dans les données d'image seulement quand il est permis d'exécuter une copie des données codées.

10. Procédé de décodage selon la revendication 9, dans lequel
dans le procédé de génération, des données factices qui diffèrent des données de type d'image sont imbriquées dans les données d'image seulement quand une exécution de copie des données codées est interdite.

11. Procédé de décodage selon la revendication 10, dans lequel
dans le procédé de génération, les données factices sont imbriquées dans les données d'image par filigranage numérique.

12. Procédé de décodage selon la revendication 9, dans lequel, dans le procédé de génération, les données de type d'image sont imbriquées dans les données d'image par filigranage numérique.

13. Procédé de décodage selon la revendication 9, dans lequel
les données codées contiennent des données de contrôle de copie qui restreignent la copie des données décodées, et
dans le procédé de génération, les données décodées sont générées et les données de type d'image y sont imbriquées seulement quand les données de contrôle de copie, sont des données permettant une exécution de la copie.

14. Procédé de décodage selon la revendication 9, dans lequel
les données codées contiennent des données de contrôle de copie qui restreignent la copie des données décodées, et
dans le procédé de génération, les données décodées sont générées et des données factices qui diffèrent des données de type d'image y sont imbriquées seulement quand les données de contrôle de copie sont des données interdisant une exécution de la copie.

15. Procédé de décodage selon la revendication 9, dans lequel
les données codées sont des données vidéo comprimées composées d'une pluralité d'images fixes comprimées, et
le signal d'image imbriqué est constitué des données de type qui indiquent le type d'image fixe.

16. Procédé de décodage selon la revendication 15, dans lequel
les données d'image vidéo comprimées sont comprimées suivant un procédé MPEG, et les données de type indiquent que l'image fixe est une image à codage intra.

17. Support d'enregistrement de données ayant un programme de décodage enregistré dedans afin d'être lu par un processeur de décodage inclus dans un décodeur (SB) lequel génère des données décodées en décodant des données codées suivant le procédé MPEG, dans lequel le programme de décodage fait que le processeur de décodage fonctionne comme :
un dispositif de détection (3) qui détecte un type d'une image à codage MPEG dans les données codées sur la base des données codées ; et
un dispositif de génération (4) qui génère les données décodées contenant des données d'image en décodant les données codées sur la base du type d'image détecté,
le programme de décodage étant **caractérisé en ce qu'**il fait que le processeur de décodage opère de manière que :
le dispositif de génération (4) imbrique un signal d'image qui indique le type d'image détecté dans les données décodées, dans lequel le dispositif de génération (4) imbrique les données de type d'image dans les données d'image seulement quand il est permis d'exécuter une copie des données codées.

18. Support d'enregistrement de données selon la revendication 17, dans lequel le dispositif de génération (4) imbrique des données factices qui diffèrent des données de type d'image seulement quand une exécution de copie des données codées est interdite.

19. Support d'enregistrement de données selon la revendication 18, dans lequel le dispositif de génération (4) imbrique les données factices dans les données d'image par filigranage numérique.

20. Support d'enregistrement de données selon la revendication 17, dans lequel le dispositif de génération (4) imbrique les données de type d'image dans les données d'image par filigranage numérique.

21. Support d'enregistrement de données selon la revendication 17, dans lequel
les données codées contiennent des données de contrôle de copie qui restreignent une copie des données décodées, et
le dispositif de génération (4) génère les données décodées et y imbrique les données de type d'image seulement quand les données de contrôle de copie sont des données permettant une exécution de la copie.

22. Support d'enregistrement de données selon la revendication 17, dans lequel
les données codées contiennent des données de contrôle de copie qui restreignent la copie des données décodées, et
le dispositif de génération (4) génère les données décodées en y imbriquant des données factices qui diffèrent du signal d'image seulement quand les données de contrôle de copie sont des données qui interdisent une exécution de la copie.
